**Europäisches Patentamt**

**European Patent Office**

**Office européen des brevets**

(19)

(11) Veröffentlichungsnummer: **0 211 825**
**B1**

(12)    **EUROPÄISCHE PATENTSCHRIFT**

(45) Veröffentlichungstag der Patentschrift:
**27.04.88**

(21) Anmeldenummer: **85900626.4**

(22) Anmeldetag: **13.02.85**

(86) Internationale Anmeldenummer:
**PCT/CH 85/00026**

(87) Internationale Veröffentlichungsnummer:
**WO 86/04975 (28.08.86 Gazette 86/19)**

(51) Int. Cl.⁴: **F 16 L 55/16,** F 16 L 55/18,
E 21 B 29/10, B 05 C 7/08

(54) **VORRICHTUNG ZUM AUSFÜLLEN UND VERLEIMEN VON VERTIEFUNGEN ALLER ART IN EINER NICHTBEGEHBAREN ROHRLEITUNG.**

(43) Veröffentlichungstag der Anmeldung:
**04.03.87 Patentblatt 87/10**

(45) Bekanntmachung des Hinweises auf die Patenterteilung:
**27.04.88 Patentblatt 88/17**

(84) Benannte Vertragsstaaten:
**AT BE CH DE FR GB LI LU NL SE**

(56) Entgegenhaltungen:
**EP-A-0 025 204**
**FR-A-1 360 642**
**FR-A-1 571 793**
**US-A-2 158 579**
**US-A-4 329 937**

(73) Patentinhaber: **Kunststoff- Technik AG Himmler,
Leimbachstrasse 38 / Frymannstrasse 15, CH-
8041 Zürich (CH)**

(72) Erfinder: **HIMMLER, Erich, Im oberen Boden 142,
CH- 8049 Zürich (CH)**

(74) Vertreter: **Siebert, Rolf, Dipl.- Masch.Ing.ETH,
ROTTMANN, MASPOLI + ZIMMERMANN AG
Patentanwälte Glattalstrasse 37, CH- 8052 Zürich
(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Ausfüllen und Verleimen von Vertiefungen aller Art in einer nichtbegehbaren Rohrleitung, mit einem ferngesteuerten Fahrzeug mit einer Spachteleinrichtung zum Aufbringen und Verstreichen des zum Ausfüllen und Verleimen verwendeten Materials, einer zum Auffinden der Vertiefungen dienenden Fernsehkamera sowie einem wegnehmbaren Behälter für das genannte Material. Die Vertiefungen sind Krater, Ausbrüche oder auch Risse; die letzteren müssen nicht nur ausgefüllt werden, sondern das Material soll auch die Risswände wieder belastbar verbinden, also verleimen.

Eine Vorrichtung, welche solche nichtbegehbaren Rohrleitungen, d.h. solche von einem Durchmesser von 25-100 cm repariert, ist bereits aus der EP-A-0 025 204 bekannt geworden. Sie weist ausser einer Vorrichtung, welche Löcher in die schadhaften Stellen der Rohrleitung bohrt, um sie dann nachher zu verschliessen, auch noch eine Zusatzeinrichtung auf, welche die an der Aussenseite des Rohres bereits verschlossenen Bohrlöcher auch noch von innen her mit einer Spachtelmasse ausfüllt und diese glattstreicht, sodass die Rohrleitung wieder eine vollständig glatte Innenfläche, mindestens an der Reparaturstelle, aufweist. Die Zusatzeinrichtung kann jedoch auch allein betrieben werden, wenn die Vertiefungen lediglich geringfügige Korrosionsstellen oder Ausbrüche sind, die mit einem blossen Auftrag von Spachtelmasse ausgebessert werden können.

Bei jener Vorrichtung war jedoch diese Zusatzeinrichtung, also die Spachteleinrichtung, ein Bestandteil der ersteren, welche gleichzeitig auch noch eine Bohreinrichtung aufwies. Die Zuleitungen für das Spachtelmaterial waren daher in der Vorrichtung fest eingebaut. Diese musste daher meist nach jeder ausgeführten Arbeit aus der Rohrleitung zurückgezogen werden, um an einer begehbaren Stelle der letzteren, d.h. unter einem vertikalen Kontrollschacht, von der rasch aushärtenden Spachtelmasse befreit und gereinigt zu werden. Dies hatte längere Stillsetzungen der Vorrichtung zur Folge, was den Fortgang der Arbeiten behinderte.

Der Zweck der vorliegenden Erfindung besteht daher darin, die Vorrichtung, welche jetzt nur noch zum Ausfüllen der ausgebohrten, ausgefrästen oder lediglich schadhaften Stellen dient (das Ausbohren der Löcher oder Ausfräsen der Risse in der Rohrleitung wird von einer besonderen Vorrichtung durchgeführt), so zu verbessern, dass sie an der genannten Stelle nur noch kurz gewartet werden muss und dann sofort wieder einsatzbereit ist. Die Reinigungsarbeiten und auch das Wiederauffüllen mit Spachtelmaterial können damit unabhängig vom Einsatz der Vorrichtung durchgeführt werden.

Ansätze in dieser Richtung sind schon früher versucht worden, so z. B. in einer Vorrichtung nach der US-A-4 329 937. Diese enthält eine zweiteilige Spachtelvorrichtung, bestehend aus einem fahrbaren Materialbehälterwagen und einem ebenfalls fahrbaren Einrichtungswagen, der die Spachtelvorrichtung trägt. Der Materialbehälterwagen wäre somit an und für sich unabhängig vom Einrichtungswagen und könnte daher gefüllt werden, während sich ein zweiter, gleicher Wagen im Einsatz befindet. Da jedoch der Behälter- und der Einrichtungswagen miteinander durch zahlreiche Schrauben verbunden sind, kommt eine Trennung praktisch nur bei einer Generalüberholung in Frage. Die Spachtelvorrichtung wird daher nach Aufbrauchen des Materials als Ganzes zur Servicestelle zurückgefahren, wo der Behälterwagen wieder aufgefüllt wird. Die Stillstandszeit ist also immer noch relativ gross.

Der oben angeführte Zweck und die Vermeidung der soeben genannten Nachteile werden nun erfindungsgemäss dadurch erreicht, dass der Behälter ein auf dem Fahrzeug selber gelagertes, das Material enthaltendes Rohr ist, das durch einen in seinem Innern frei beweglichen, über eine Leitung mit Druckluft beaufschlagbaren Kolben in die Spachtelvorrichtung hinein entleerbar ist und nach erfolgter Leerung durch blosses Lösung von Verriegelungen und Verschlüssen sowohl vom Fahrzeug als auch von der Spachtelvorrichtung leicht wegnehmbar und durch ein anderes, mit Material gefülltes und ebenfalls einen Kolben aufweisendes Rohr ersetzbar ist.

Auf diese Weise kann die Vorrichtung innert kürzester Zeit wieder betriebsbereit gemacht werden, während das ausgewechselte Rohr samt seinem Kolben in Ruhe gereinigt und wieder neu gefüllt werden kann.

Zweckmässig ist das Rohr in einem durch einen Antrieb um seine Längsachse drehbaren Zylinder gelagert und an diesem mittels Verriegelungen befestigt, während die Spachteleinrichtung auf dem Rohr angebracht und mit diesem über Verschlüsse verbunden ist.

Ein Ausführungsbeispiel, der erfindungsgemässen Vorrichtung ist in den bei liegenden Zeichnungen dargestellt; es zeigen
Fig. 1 eine Seitenansicht der Vorrichtung,

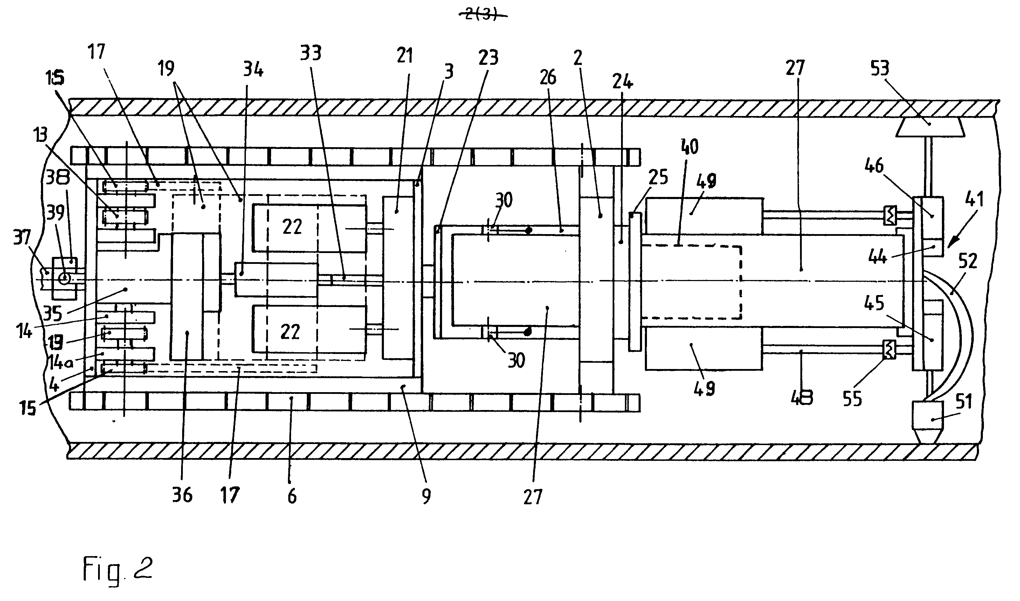

Fig. 2 eine Aufsicht auf der Vorrichtung bei abgenommenem Fahrantrieb und
Fig. 3 eine Stirnansicht der Vorrichtung mit der Spachteleinrichtung.

Die Vorrichtung weist ein Fahrzeug mit einer Grundplatte 1 auf. Diese trägt an Ihrem einen Ende ein breites Stützlager 2, in der Mitte eine mittlere vertikale Lagerplatte 3 und am anderen Ende eine zweite oder Endplatte 4. Die Platten sind in geeigneter Weise an der Grundplatte befestigt. Ferner trägt die Grundplatte 1 ein Gehäuse 5, anschliessend an die Lagerplatte 3. In diesem Gehäuse ist die Steuerelektronik für den gesamten Betrieb der Vorrichtung unterbracht.

Das Fahrzeug weist im weiteren auch an der Grundplatte 1 gelagerte Achsen für die Fortbewegungsmittel auf. Diese Fortbewegungsmittel können Räder sein; im vorliegende Ausführungsbeispiel bestehen sie aber aus zwei Raupenketten 6, je eine auf jeder Seite der Vorrichtung. Jede Raupenkette läuft über zwei Umlenkräder 7, 8, von denen wenigstens eines, besser jedoch beide, angetrieben sind, wobei dann die Räder 8 mittels Ketten 9 mit den eigentlichen Antriebsrädern 7 verbunden sind. Zwischen den beiden Umlenkrädern 7, gleitet die Raupenkette 6 in einer oberen und einer unteren Nut einer Kettenführungsplatte 10. Die Breite dieser Platte und der Durchmesser der beiden Räder 7, 8 bestimmen den Abstand der, Grundplatte 1 vom Boden der Rohrleitung; die Räder 7, 8 können für andere Rohrleitungsdurchmesser durch solche mit anderem Durchmesser und dementsprechend die Kettenführungsplatten 10 durch solche anderer Breite ersetzt werden.

Der Antrieb der Achse der beiden Umlenkräder 7 erfolgt über erste Kettenräder 11, erste Ketten 12 und zweite Kettenräder 13, welche zwischen vorstehenden Rippen 14, 14a der Endplatte 4 gelagert sind. Auf der Aussenseite jeder äusseren Rippe 14a sitzt auf der Welle des Kettenrades 13 ein weiteres Kettenrad 15. Jedes dieser äusseren Räder 15 erhält, seinen Antrieb über zweite und dritte Ketten 16, 17 mit dazwischengeschalteten Räderpaaren 18. Die Antriebskraft zum Fahren wird von Elektromotoren 19 aufgebracht. Wegen der beschränkten Platzverhältnisse sind vier Fahrmotoren 19 vorgesehen, van denen je zwei miteinander gekuppelt sind und auf eine Antriebsseite des Fahrzeuges wirken. Die Fahrmotoren sind an einer Deckplatte 20 aufgehängt. Mit den verschiedenen Antriebsketten und Rädersätzen 11-13, 15-18 wird nicht nur die Wahl einer geeigneten Übersetzung, die unter anderem von der Wahl des Durchmessers der Räder 7, 8 und der Kettenführungsplatte 10 beeinflusst wird, sondern auch eine leichte Wegnahme der auf die Platten 3, 4 aufgesetzten Deckplatte 20 samt den Elektromotoren 19 ermöglicht, zwecks Freilegung der darunter befindlichen, noch zu beschreibenden Einrichtung.

An der Lagerplatte 3 ist ein Drehlager 21 angebracht. Es enthält ein Getriebe, das von zwei in der, Längsrichtung der Vorrichtung angeordneten Elektromotoren 22 in nicht näher dargestellter Weise angetrieben wird. Auf seiner Achse befinden sich auf der andern Seite der Lagerplatte 3 eine Schebe 23 und an ihr befestigt ein Zylinder 24, der über einen Teil seiner Länge eine Ausnehmung sowie an seinem einen Ende einen Flansch 25 aufweist. Die Ausnehmung umfasst den halben umfang des Zylinders, sodass dieser dort eine Halbschale 26 bildet. Dieser Zylinder 24 ist drehbar im Stützlager 2 gelagert. Er dient zur Aufnahme eines Rohres 27. Dieses wird in den Zylinder 24 von der Seite seines Flansches 25 her soweit eingeschoben, bis es mit seinem Ende an der Scheibe 23 gegen eine in diese, eingelegte ringförmige Dichtung 28 anliegt. Zweckmässig wird noch eine weitere Dichtung 29 vorgesehen, welche das Rohr 27 an seinem Umfang abdichtet und sich im Zylinder 24 anschliessend an die Scheibe 23 befindet. In der eingeschobenen Lage wird das, Rohr 27 von zwei Verriegelungen 30 auf dem Rand der Halbschale 26 in seiner axialen Lage arretiert. Diese Verriegelungen sind deswegen nötig, weil das Rohr 27, das mit dem Spachtelmaterial angefüllt ist, einen frei beweglichen Kolben 31 mit zwei Dichungsringen 32 enthält, der zum Ausstossen dieses Materials dient und mit Druckluft beaufschlagt wird, die über eine Leitung 33 in den Zylinder 24 eingeführt ist. Diese Leitung führt aus einer Drehmuffe 34 heraus durch Drehlager 21 und die Lagerplatte 3 hindurch in die Scheibe 23 hinein. Die Drehmuffe 34 hat den Zweck, die Luft aus einem fest an einem Anschlussblock 35, der an der Endplatte 4 befestigt ist, angebrachten und daher ortsfesten Steurventil 36 in die sich mit der Scheibe 23 und dem Rohr 27 drehende Leitung 32 einzuleiten.

An der Endplatte 4 ist ein flexibler Schlauch 37 angeschlossen. Dieser führt von einem nicht dargestellten Kompressor heran und enthält ausser der eigentlichen Druckluftleitung noch konzentrisch um diese herum angeordnete elektrische Kabel für die Stromversorgung der Motoren 19, 22, der Steuerelektronik im Gehäuse 5 sowie für weitere Verbraucher. Der Kompressor selber befindet sich auf einem Servicefahrzeug, das oberhalb der zu reparierenden Rohrleitung unmittelbar neben einem zu dieser führenden vertikal en Schacht parkiert wird. Die Luft wird in einer Kupplung 38 abgezweigt und über eine separate Leitung 39 durch den Anschlussblock 35 in das Steuerventil 36 eingeführt.

Strom wird auch für eine Fernsehkamera 40 mit Lichtquelle benötigt. Diese ist am Flansch 25 des Zylinders 24 angebracht. Da der letztere mittels der Motoren 19 verdreht werden kann, schwenkt auch die Kamera 40 um seine Längsachse, die im übrigen genau mit der Achse der Rohrleitung zusammenfallen muss; auf dem Fernsehmonitor im Servicefahrzeug sieht man dann die zu reparierende Rohrleitung sich scheinbar um ihre Achse drehen.

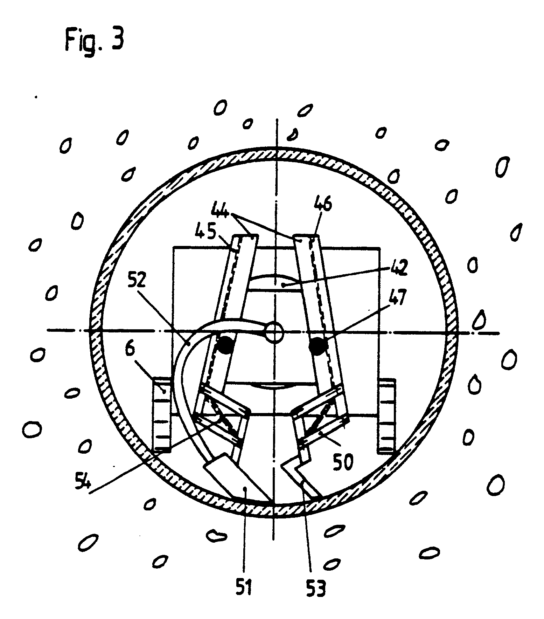

Am Ende des Rohres 27 befindet sich die Spachteleinrichtung, die gesamthaft mit 41 bezeichnet ist. Sie weist einen Rohrabschlussdeckel 42 auf, der auf das Ende des Rohres 27 aufgesezt wird und mittels Verschlüssen 43 an diesem befestigt ist. Der Rohrabschlussdeckel 42 träst gemäss Fig. 3 zwei schräg gegeneinander verlaufende ortfeste Führungen 44 für zwei Zahnstangen 45, 46. Die Zahnstangen stehen in ständigem Eingriff mit zwei Ritzeln 47, die über Wellen 48 von zwei in Längsrichtung des Rohres 27 angeordneten und am Flansch 25 angeschraubten Motoren 49 angetrieben werden. Beide Zahnstangen tragen an ihren Enden je ein Parallelogrammgelenk 50. Dasjenige der Zahnstange 45 trägt seinerseits eine Düse 51, die über einen biegsamen Schlauch 52 mit dem Innern des Rohres 27 in Verbindung steht. Das andere Gelenk an der Zahnstange 46 trägt einen elastischen Spachtel 53. Da die ganze Spachteleinrichtung 41 am Rohr 27 befestigt ist, dreht sie sich mit diesem ebenfalls um dessen Längsachse, wobei gleichzeitig die Motoren 49 eingeschaltet werden können, die dann die Düse 51 und den Spachtel 53 im wesentlichen quer zur Längsachse des Rohres 27 aus- und einfahren. Wird dann noch das gesamte Fahrzeug vor- oder rückwärtsbewegt, ist es möglich, jedem beliebig in der Wand der Rohrleitung verlaufenden Riss exakt zu folgen.

Während die Zahnstangen 45, 46 dazu dienen, die Spachteleinrichtung an verschiedene Rohrleitungsdurchmesser anzupassen, haben die Parallelogrammgelenke 50 die Aufgabe, allfällige Unrundheiten der Rohrleitung auszugleichen, wozu sie durch Federn 54 vorgespannt werden.

Im Betrieb wird die Vorrichtung bei eingeschalteter Fernsehkamera an die auszubessernde Stelle gefahren. Das mit Spachtelmaterial gefüllte Rohr 27 ist vorher, in den Zylinder 24 eingesetzt und mit diesem verriegelt, worden. Nunmehr wird Druckluft in das Rohr 27 eingegeben und dieses gleichzeitig um seine Längsachse gedreht; verläuft die zu reparierende Stelle teilweise in Längsrichtung, wird die Vorrichtung gleichzeitig langsam in Längsrichtung bewegt. Die Druckluft scheibt den Kolben 31 vor sich her, welcher das Material auspresst; dieses wird durch die langsame Rotation der sich mit dem Rohr 27 mitdrehenden Düse 51 auf die Innenwand der Rohrleitung aufgebracht und mit dem Spachtel 53 glattgestrichen. Hat der Kolben 31 seine Endstellung erreicht, wird die ganze Vorrichtung bis zum schon erwähnten Serviceschacht zurückgefahren. Dort ist ein neues gefülltes Rohr 27 schon bereitgestellt. Das leere Rohr wird gegen das gefüllte ausgetauscht, wozu lediglich zuerst die Spachteleinrichtung 41 noch Lösen der Verschlüsse 43 abmontiert und die Verriegelungen 30, gelöst werden müsen. Das gefüllte Rohr wird aufgesetzt und die Spachteleinrichtung wieder montiert. Der Austausch geht also sehr rasch vor sich, und die Vorrichtung kann sofort und praktisch ohne Zeitverlust wieder zum Einsatzort gelangen. Das leere Rohr 27 samt dem Kolben 31 kann zum Servicefahrzeug gebracht und dort gereinigt und wieder gefüllt werden, während die Vorrichtung in der Rohrleitung weiterarbeitet.

Weil also die Spachteleinrichtung 41 vom Rohr 27 leicht abmontiert werden muss, aber im montierten Zustand mit den fest angebrachten Motoren 49 in Verbindung steht, ist jede Welle 45 zweiteilig; die beiden Teile stehen über eine Klauenkupplung 55 miteinander im Eingriff, sodass das Abmontieren der Spachteleinrichtung keinerlei Probleme mit sich bringt.

Zu beachten ist, dass das Auspressen von Spachtelmaterial aus der Düse 51 weder von der Drehung des Rohres 27 um seine Längsachse noch von der Bewegung des Fahrzeuges abhängig ist. Dies ist von Bedeutung, denn gelegentlich sind auch Schadstellen auszubessern, die zwar eben relativ kleinen Umfang, dafür aber eine beträchtliche Tiefe aufweisen, sodass sehr viel Spachtelmaterial an ein und demselben Ort aufgebracht werden muss. In einem solchen Fall wird, namentlich wenn eine überhängende Schadstelle von unten her ausgebessert werden muss, ein hier nicht dargestellter Verschalungsaufsatz über der Schadstelle angebracht, der in seiner Mitte eine Bohrung aufweist. Durch diese wird ein auf die Mündung der Düse 51 aufgesetzter Schlauch hindurchgesteckt. Der im wesentlichen rechteckige Verschalungsaufsatz weist eine dem gerade auszubessernden Rohr angepasste Krümmung auf. Es können Aufsätze gleicher Krümmung, aber verschiedener Länge zum Einsatz kommen, je nach Grösse der Schadstelle. Im wesentlichen gleicht der genannte Aufsatz den Abdichtschilden 9 in der zu Beginn erwähnten europäischen Patentschrift Nr. 0 023 347 und dient wie jene dazu, den Austritt b. w. das Wegfliessen des Spachtelmaterials aus der Einfüllstelle zu verhindern.

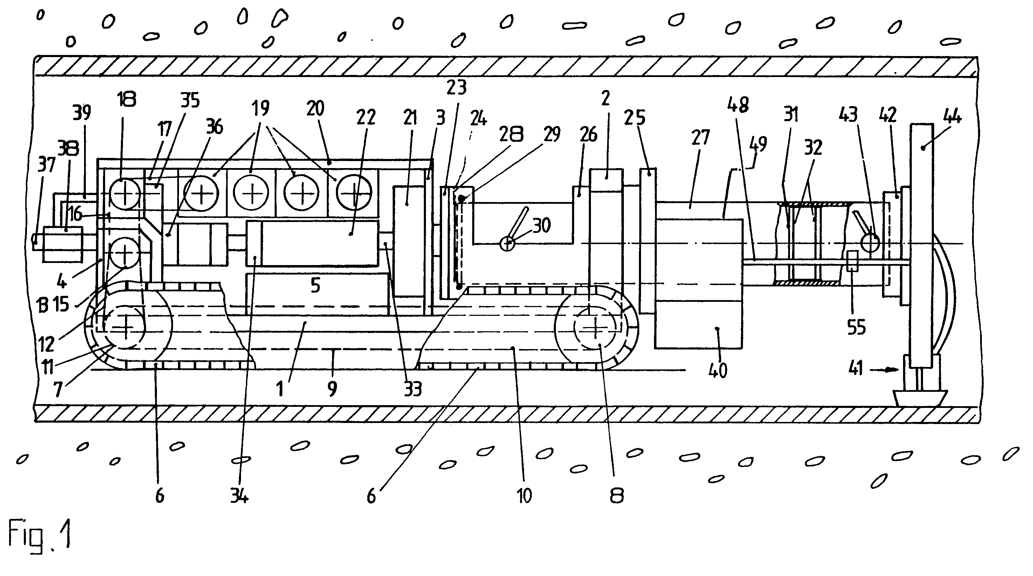

Es besteht auch die Möglichkeit, statt Druckluft Dampf einzuführen, der dann anstelle des Spachtelmaterials aus der Düse 51 austritt. Damit lassen sich auch Reinigungsarbeiten durchführen. Zu diesem Zweck wird nach Entfernen des geleerten Rohres 27 der flexible Schlauch eines im oder neben dem Servicefahrzeug stationierten Hochdruckdampferzeugers über den in Fig. 1 linken Teil der Vorrichtung hinweggeführt und die am Schlauchende angebrachte Dampfdüse mit ihrer Halterung so in der Spachteleinrichtung 41 eingespannt, dass der Dampf direkt in den Schlauch 52 eintritt.

## Patentansprüche

1. Vorrichtung zum Ausfüllen und Verleimen von Vertiefungen aller Art in einer nichtbegehbaren Rohrleitung, mit einem ferngesteuerten Fahrzeug, mit einer Spachteleinrichtung zum Aufbringen und Verstreichen des zum Ausfüllen und Verleimen verwendeten Materials, einer zum Auffinden der Vertiefungen dienenden Fernsehkamera sowie einem wegnehmbaren Behälter für das genannte Material, dadurch gekennzeichnet, dass dieser Behälter ein auf dem Fahrzeug selber gelagertes, das Material enthaltendes Rohr (27) ist, das durch einen in sei nein Innern frei beweglichen, über eine Leitung (33) mit Druckluft beaufschlagbaren Kolben (31) in die Spachtelvorrichtung (41) hinein entleerbar ist und nach erfolgter Leerung durch blosses Lösung von Verriegelungen (30) und Verschlüssen (43) so wohl vom Fahrzeug als auch von der Spachtelvorrichtung (41) leicht wegnehmbar und durch ein anderes, mit Material gefülltes und ebenfalls einen Kolben (31) aufweisendes Rohr ersetzbar ist.

2. Vorrichtung nach Anspruch 1, dadurch gekennzeichnet, dass Rohr (27) in einem durch einen Antrieb (22) um seine Längsachse drehbaren Zylinder (24) gelagert und an diesem mittels Verriegelungen (30) befestigt ist.

3. Vorrichtung nach Anspruch 2, dadurch gekennzeichnet, dass das im Zylinder (24) eingesetzte Rohr an einen Schlauch (52) der Spachtelvorrichtung (41) angeschlossen ist, der zur Aufnahme des vom Kolben (31) aus dem Rohr (27) ausgestossenen Materials dient und seinerseits in eine Düse (51) zur Verteilung des Materials mündet, wobei die Spachtelvorrichtung ausserdem noch einen Spachtel (53) aufweist, und sowohl die Düse (51) wie der Spachtel (53) an Zahnstangen (45, 46) mittels Gelenken (50) gelagert und von diesen im wesentlichen quer zum Rohr (27) ausfahrbar sind.

4. Vorrichtung nach Anspruch 3, dadurch gekennzeichnet, dass das im Zylinder (24) eingesetzte Rohr (27) an seinem an der Druckluftleitung angeschlossenen Ende gegen eine, mit einer Dichtung versehene, Scheibe (23) anliegt, an die auch der Zylinder (24) angeschlossen ist.

5. Vorrichtung nach Anspruch 4, dadurch gekennzeichnet, dass die Leitung durch die Scheibe (23) hindurchführt, mit dieser und dem Zylinder (24) drehbar ist und an ein stationäres, nicht-rotierendes Ventil (36) über eine diese Drehung ermöglichende Drehmuffe (34) angeschlossen ist.

6. Vorrichtung nach Anspruch 3, dadurch gekennzeichnet, dass die Zahnstange (45, 46) der Spachtelvorrichtung mittels Ritzel (47) von am Zylinder (24) fest annngebrachten Motoren (49) bewegbar sind, wobei die das Drehmoment von den Motoren auf die Ritzel übertragenden Wellen (48) zweiteilig sind, und zwichen diesen Teilen Klauenkupplungen (55), welche die Wegnahme der ganzen Spachtelvorrichtung (41) vom Rohr (27) ermöglichen, angeordnet sind.

## Claims

1. Device for filling and glueing all kinds of depressions in inaccessible pipe conduits, comprising a remote-controlled vehicle carrying a mastic-spreading apparatus for depositing and spreading the material used for filling and glueing, a television camera used for locating the depressions and a removable container for the material as well as a piston for pushing said material gradually out of the container, characterized in that said container is a pipe (27) carried on the vehicle itself and containing the material, said pipe to be emptied into the masticspreading apparatus (41) by the piston (31) which is freely movable within the pipe under the action of pressurized air from a conduit (33); locks (30) and closures holding said pipe (27) onto the vehicle and connecting it in the mastic-spreading apparatus and permitting, upon their actuation, and easy removal of said pipe from the vehicle and the apparatus in order to replace it by another pipe which is filled with material and also houses a piston.

2. Device according to Claim 1, characterized in that the pipe is supported in a cylinder (24) removable by a drive (22) about its longitudial axis and secured to it by means of locks (30).

3. Device according to Claim 2, characterized in that the pipe supported in the cylinder (24) is connected to a hose (52) of the masticspreading apparatus (41), said hose receiving the material expelled from the pipe (27) by the freely movable piston (3I) and ending at a nozzle (51) for distributing the material, the masticspreading apparatus furthermore comprising a spatula (53), said spatula (53) and said nozzle (51) being supported on racks (45, 46) by means of links (50) that permit their movement substantially transverse to the pipe (27).

4. Device according to Claim 3, characterized in that the tube (27) inserted into the cylinder (24) contacts with that end that is connected to the air pressure conduit a disk (23) which is provided with a seal (28), the cylinder (24) being connected to said disk, too.

5. Device according to Claim 4, characterized in that the air conduit passes through the disk (23), is rotatable with it and with the cylinder (24) and is connected to a stationary, non-rotating valve (36) by means of a rotational bushing (34) enabling said rotation.

6. Device according to Claim 5, characterized in that the racks of the mastic spreading apparatus are movable by means of pinions (47) driven by motors (49) mounted solidly on the cylinder (24), the shafts (48) which transmit the torque from the motors to the pinions consisting of two parts between which dog clutches (55) are arranged that enable the removal of the entire mastic spreading device (41) from the pipe.

## Revendications

1. Dispositif pour remplir et enduire toutes sortes de cavités dans une canalisation inaccessible, comportant un chariot commandé à distance, un dispositif d'enduction destiné à amener et étaler la matière destinée au remplissage et à l'enduction, une caméra de télévision pour la recherche des cavités ainsi qu'un récipient amovible contenant ladite matière, caractérisé en ce que ledit récipient est un tube (27) contenant la matière, disposé sur le chariot lui-même, le contenu du tube pouvant être vidé dans le dispositif d'enduction (41) au moyen d'un piston libre (31), mobile en son intérieur et soumis à l'action de l'air comprimé amené par une canalisation (33), et ledit tube après obtention du vidage, pouvant être facilement enlevé par simple dégagement de verrous (30) et de fermetures (43) aussi bien du chariot lui-même que du dispositif d'enduction (41) et être remplacé par un autre tube rempli de matière et muni de même d'un piston interne (31).

2. Dispositif conforme à la revendication 1, caractérisé en ce que le tube (27) est disposé dans un cylindre (24) pouvant tourner autour de son axe longitudinal grâce à un dispositif moteur (22) et en ce qu'il est fixé sur ledit cylindre au moyen de verrous (30).

3. Dispositif conforme à la revendication 2, caractérisé en ce le tube (27) introduit dans le cylindre (24) est raccordé à un tuyau (52) du dispositif d'enduction (41) recevant la matière expulsée du tube (27) par le piston (31) et débouchant de son côté dans une buse (51) destinée à la réparatiotion de cette matière, le dispositif d'enduction comportant en outre une spatule (53), et la buse (51) de même que la spatule (53) étant solidaires de crémaillères (45, 46) par l'intermédiaire d'articulations (50) qui permettent de les déplacer sensiblement perpendiculairement au tube (27).

4. Dispositif conforme à la revendication 3, caractérisé en ce que le tube (27) engagé dans le cylindre (24) bute par son extrémité raccordée à la canalisation d'air comprimé, contre un disque (23) comportant une garniture d'étanchéité, disque auquel est également fixé le cylindre (24).

5. Dispositif conforme à la revendication 4, caractérisé en ce que la canalisation traverse le disque (23), peut tourner avec celui-ci et avec le cylindre (24) et est raccordée à une vanne (36) fixe et non tournante, par l'intermédiaire d'un manchon tournant (34) qui rend cette rotation possible.

6. Dispositif conforme à la revendication 3, caractérisé en ce que les crémaillères (45, 46) du dispositif d'enduction sont déplaçables par l'intermédiaire de pignons (47) au moyen de moteurs (49) fixés sur le cylindre (24), les arbres (48) qui transmettent le couple des moteurs auxdits pignons étant divisés en deux parties entre lesquelles sont disposés des accouplements à doigts (55) qui permettent l'enlèvement du dispositif d'enduction (41) du tube (27).

Fig.1

Fig. 2

3

Fig. 3